# EUROPÄISCHE PATENTSCHRIFT

(11) **EP 2 509 480 B1**
(45) Veröffentlichungstag und Bekanntmachung des Hinweises auf die Patenterteilung: **09.01.2019**
(21) Anmeldenummer: 10779763.1
(22) Anmeldetag: 11.11.2010
(51) Int. Cl.: A47J 43/07, A47J 43/10

(54) **KÜCHENGERÄT MIT RÜHRVORRICHTUNG**
KITCHEN APPLIANCE HAVING A STIRRING DEVICE
APPAREIL DE CUISINE AVEC DISPOSITIF MÉLANGEUR

(30) Priorität: 09.12.2009 DE 102009057448
(43) Veröffentlichungstag der Anmeldung: 17.10.2012
(73) Patentinhaber: BSH Hausgeräte GmbH, 81739 München (DE)
(72) Erfinder: SEMEJA, Uros, 3327 Smartno ob Paki (SI); GOLAVSEK, Samo, 3312 Prebold (SI); DANIJEL, Roman, 3312 Ljubno (SI)
(86) Internationale Anmeldenummer: PCT/EP2010/067270
(87) Internationale Veröffentlichungsnummer: WO 2011/069768

(56) Entgegenhaltungen:
- CH-A- 170 402
- DE-A1- 19 733 331
- DE-B- 1 206 129
- GB-A- 397 448
- GB-A- 977 761
- JP-A- 2005 034 558
- JP-U- 63 178 568
- US-A1- 2006 050 606

## Beschreibung

### Hintergrund der Erfindung

Die vorliegende Erfindung betrifft ein Küchengerät, insbesondere Küchenmaschine, Hand- oder Stabmixer, mit wenigstens einer Rührvorrichtung, insbesondere Quirl, zum Verarbeiten von Nahrungsmitteln, wobei die Rührvorrichtung einen Antriebsschaft umfasst, an dessen einem Ende eine Koppelstelle zur Kupplung mit dem Küchengerät und an dessen anderen Ende wenigstens ein schlaufenförmiger Bügel mit einer Wirkfläche angeordnet ist.

### Stand der Technik

Bekanntermaßen werden beim Quirlen Nahrungsmittel wie insb. flüssige oder halbflüssige Zutaten und Gemische schaumig aufgeschlagen oder fein vermengt bzw. homogenisiert. Klümpchenbildungen, wie sie zum Beispiel beim Rühren mit einem Löffel entstehen, können dabei weitgehend vermieden werden, wobei die Konsistenz der fertigen Speise von der Art der Zutaten und der Geschwindigkeit des Quirlens sowie dessen Ausgestaltung abhängt.

Die DE 1 429 978 A1 offenbart einen Quirl dergestalt ausgebildet, dass während des Quirlens eine Hubwirkung auf das zu bearbeitende Gut ausgeübt wird, so dass zur damaligen Zeit eine verhältnismäßig milde und dennoch stark lufteintreibende Schlagwirkung erzielbar war. Die bekannte, weitverbreitete Ausgestaltung eines Quirls vermag heutzutage jedoch nicht immer die an modernes Kochen gestellten Anforderungen erfüllen.

Eine verbesserte Ausgestaltung eines Quirls offenbart die EP 0 410 527 B1 für eine Küchenmaschine. Der offenbarte Quirl weist eine gute Schlag- und Mischwirkung auf das zu verarbeitende Mischgut auf, indem dieser mehr als vier bogenförmige Bügel vorsieht, welche seitlich vom Schaft des Quirls angeordnet sind. Die bogenförmigen Bügel weisen an ihrem jeweiligen Ende eine Verbindung zu einem Ring auf, welcher radial um den Schaft des Quirls verläuft. Die bogenförmigen Bügel sind in Umfangsrichtung des umlaufenden Ringes symmetrisch verteilt. Um den Schlageffekt und die Mischwirkung zu verbessern schlägt die EP 0 410 527 B1 die Verteilung einer Vielzahl bogenförmiger Bügeln entlang des Ringes vor, welche abwechselnd um den Ring in axialer Richtung verteilt sind. Die Verwendung einer Vielzahl von bogenförmigen Bügeln ist jedoch nicht universell einsetzbar und schwer zu reinigen. Die DE 197 33 331 A1 sowie die CH 170402 A zeigen weitere Geräte zum Rühren.

### Der Erfindung zugrundeliegende Aufgabe

Der Erfindung liegt die Aufgabe zugrunde, ein gegenüber dem Stand der Technik verbessertes Küchengerät bereitzustellen, welches universell einsetzbar, leicht reinigbar und bei insb. verkürzter Verarbeitungszeit zumindest gleichbleibende oder vorzugsweise verbesserte Mischergebnisse im Vergleich zu bekannten Küchengeräten erzielt.

### Erfindungsgemäße Lösung

Die Lösung der gestellten Aufgabe gelingt durch ein Küchengerät mit den Merkmalen des Anspruchs 1. Das erfindungsgemäße Küchengerät baut auf gattungsbildende Küchengeräte dadurch auf, dass an den Bügeln jeweils mindestens zwei Wirkkörper angeordnet sind, welche die Wirkfläche auf das zu verarbeitende Nahrungsmittel vergrössern, wobei die Wirkkörper der Bügel jeweils auf unterschiedlichen Niveaus symmetrisch zu der Rotationsachse des Antriebsschaftes am jeweiligen Bügel angeordnet sind und folglich auf unterschiedlichen Niveaus mit dem Nahrungsmittel in Kontakt stehen. Der Wirkkörper hat zum Vorteil, dass er eine Erhöhung der effektiven Fläche bewirkt, die auf das zu verarbeitende Nahrungsmittel bzw. Mischgut einwirkt und so schnell und schonend die gewünschte Konsistenz erreicht. Im Falle des Steifschlagens von Nahrungsmitteln wie insbesondere Eiweiß oder Sahne wird mittels des wenigstens einen erfindungsgemäßen Wirkkörpers zugleich mehr Luft in das Nahrungsmittel eingeschlagen, was zu einer Verkürzung der Verarbeitungszeit bei vergleichbar gutem Ergebnis führt. Ebenso lassen sich auch zähe Nahrungsmittel schneller verarbeiten, da erfindungsgemäße Wirkkörper auch diese besser aufgelockert und weitere Zusatzmittel einfacher bei- bzw. untergemischt werden können.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Der jeweilige Wirkkörper weist eine Höhen-, Breiten- und maximalen Längenabmessung im Verhältnis 1:1:2, insbesondere im Verhältnis 1:1:1,5, vorzugsweise im Verhältnis 1:1:1 auf. Diese Abmessungen stellen einen einfach gestaltbaren Wirkkörper bereit, der einfach in der Herstellung ist und effektiv die Wirkfläche, welche auf das Nahrungsmittel einwirkt, vergrößert.

Vorzugsweise sind die Wirkkörper als Kugel, Zylinder, Quader, Pyramide, Würfel, Tetraeder oder dergleichen ausgebildet und am Bügel angeordnet. Durch die Auswahl unterschiedlicher geometrischer Formen kann eine hohe Effektivität der Verarbeitung erreicht werden. Ferner kann der Rührvorrichtung eines Küchengerätes nach der Erfindung ein interessantes und/oder ansprechendes Äußeres mitgegeben werden. Insbesondere ein kugelförmiger Wirkkörper ist leicht herstellbar. Aufgrund seiner kantenfreien Kontur vermeidet er insbesondere bei handbetriebenen Küchengeräten wie Mixer oder Stabmixer ein Zerkratzen bzw. Beschädigen der Rückschüssel. Ähnliche Ergebnisse werden mit einer Zylinderform erreicht, wobei die Schüssel ebenfalls nicht beschädigt werden kann. Vorzugsweise beträgt der Kugel- oder Zylinderdurchmesser ca. 5 mm und der Durchmesser des Bügels ca. 2 mm. Falls zylindrische Wirkkörper eingesetzt werden beträgt die Höhe des Zylinders ca. 10 mm. Jedoch auch andere Abmessungen sind gemäß der vorliegenden Erfindung einsetzbar. Die Zylinderform kann beispielsweise auch eine elliptische Grundfläche aufweisen, welche aufgrund der vergrößerten Kantenflächen den angestrebten Wirkeffekt vorteilhaft weiter erhöht.
Durch die Ausbildung des Wirkkörpers als Kugel, Zylinder, Quader, Pyramide, Würfel und/oder Tetraeder entstehen im Betrieb der Rührvorrichtungen zusätzliche Verwirbelungen des Nahrungsmittels, welche effektiv Luft in das Nahrungsmittel einbringen und schaumig werden lassen. Falls beispielsweise Würfel oder andere kantenaufweisende Körper eingesetzt werden, kann der Lufteinschlag in das Nahrungsmittel weiter verbessert und die Verarbeitungszeit verringert werden.

Gemäß einer bevorzugten Ausführungsform der Erfindung sind die Bügel drahtförmig ausgebildet. Die Drahtform erlaubt eine günstige Herstellbarkeit; ferner wird die Endmontage der Rührvorrichtung verbessert. So können beispielsweise die drahtförmigen Bügel vorgespannt in das Ende des Antriebsschaftes eingesetzt und anschließend verlötet werden. Dabei bewirkt die Vorspannung der Bügel eine provisorische Fixierung am Ende des Antriebsschaftes, welche z.B. in einem anschließenden Lötvorgang ohne Einsatz weiterer Fixiermittel und/oder Handgriffe fügetechnisch verbindbar sind.

Erfindungsgemäß bevorzugt sind die Bügel steif ausgebildet. Somit kann sich der Bügel während des Betriebs durch Zentrifugalkräfte nicht verformen, wobei die Steifigkeit ein effektives Verarbeitungsergebnis auf unterschiedliche Nahrungsmittel sichert, was einen universellen Einsatz der Rührvorrichtung zum Vorteil hat.

Es ist bevorzugt, dass die Bügel einen kreisförmigen, vierkantförmigen, rechteckförmigen, flachen oder anders profilierten Querschnitt aufweisen. Im Falle eines kreisförmigen Querschnittes des Bügels können die Wirkkörper einfach während der Herstellung platziert und anschließend verlötet werden. Die Wirkkörper können eine Bohrung aufweisen, welche den Bügel aufnehmen kann. Durch den kreisförmigen Querschnitt kann folglich während der Montage der Wirkkörper an die gewünschte Stelle einfach bewegt werden. Falls beispielsweise jedoch ein flacher Querschnitt des Bügels eingesetzt wird, kann eine andere Form der Bohrung gewählt werden, so dass die Wirkkörper verdrehsicher auf den Bügel angebracht werden können, um anschließend verlötet zu werden. Dies kann insbesondere vorteilhaft sein, falls die Wirkkörper nicht rotationssymmetrisch ausgebildet sind, und somit deren Lage auf dem Bügel eine bestimmte Orientierung aufweisen muss. Diese Orientierung kann dem Zerkratzen der Verarbeitungsschüssel entgegenwirken. Ähnliche Vorteile ergeben sich bei der Verwendung von Vierkantdrähten, welche ebenfalls eine Verdrehsicherheit der Wirkkörper während der Vormontage bereitstellen können. Es ist jedoch auch denkbar, dass die Abmessungen der Bohrung dergestalt ausgewählt ist, dass die Bügel mit einer gewissen Kraft hineingeschoben werden müssen, welches ebenfalls eine Vorfixierung der Wirkkörper bereitstellen kann. Anschließend werden die Wirkkörper verlötet, angeschweißt, geklebt oder dergleichen.

Weiterhin ist bevorzugt, dass jeder Bügel aus einem metallischen Material, insbesondere Edelstahl, oder einem Kunststoff hergestellt ist. Die Verwendung von metallischen Materialien bietet neben dem Vorteil der kostengünstigen Herstellung auch deren Langlebigkeit. Beim Einsatz von Kunststoffen kann die Herstellung weiter vereinfacht werden, da beispielsweise mit Hilfe eines Spritzgußverfahrens einstückige Rührvorrichtungen aus Kunststoff ganz oder teilweise gespritzt bzw. angespritzt werden können. Beispielsweise können Bügel und Antriebsschaft einstückig ausgebildet werden.

Erfindungsgemäß bevorzugt ist jeder Wirkkörper aus einem metallischen Material, insbesondere aus Edelstahl, oder einem Kunststoff hergestellt. Metallische Wirkkörper zeichnen sich ebenfalls durch einen langlebigen Einsatz aus und lassen sich einfach auf einem metallischen Bügel befestigen. Insbesondere Edelstahl kann vorteilhaft für die Verarbeitung von Nahrungsmittel verwendet werden. Dieses Material ist zudem Spülmaschinen fest, welches die Reinigung nach Beendigung des Verarbeitungsvorganges vereinfacht. Falls jedoch Kunststoffmaterialien für die Wirkkörper verwendet werden, kann auch ein Anspritzvorgang der Wirkkörper an den oder die Bügel zum Einsatz kommen. Dies hat den besonderen Vorteil, dass die Wirkkörper nicht mehr anschließend verlötet oder andersartig befestigt werden müssen. Dadurch wird vorteilhaft ein Herstellungsschritt gespart.

Es kann auch bevorzugt sein, die Oberfläche des Wirkkörpers glatt oder geriffelt auszubilden. Glatte Wirkkörper stellen eine leicht zu reinigende Rührvorrichtung bereit. Alternativ oder kumulativ können am Bügel eine Riffelung aufweisende Wirkkörper vorgesehen sein, welche das Verarbeitungsergebnis durch eine effektivere Verwirbelung und/oder effizienteren Lufteinschlag verbessern. Soweit die Riffelfurchen insbesondere gerundet ausgebildet sind, lassen sich diese ebenfalls einfach von Hand oder in der Maschine reinigen.

Ferner kann der wenigstens eine Wirkkörper abnehmbar und/oder ersetzbar ausgebildet sein. Somit können unterschiedliche Anformungen für unterschiedliche Zwecke eingesetzt werden. Im Falle einer Beschädigung eines Wirkkörpers kann gezielt nur der defekte Körper ausgetauscht oder neu eingesetzt werden.

Laut Erfindung weist die Rührvorrichtung eine Mehrzahl an Bügel, insbesondere zwei Bügel, auf, welche am Ende des Antriebsschaftes angeordnet sind. Die Verwendung mehrerer Bügel erhöht die Verarbeitungseffizienz der Nahrungsmittel.

Es ist des Weiteren bevorzugt, dass die Mehrzahl an Bügel jeweils vom Ende des Antriebsschaftes herausragt und einen gemeinsamen Kreuzpunkt, welcher auf einer Rotationsachse des Antriebsschaftes angeordnet ist, aufweist. Dies stellt einen symmetrischen Aufbau bereit, welches sich im Betrieb als vorteilhaft herausstellt, da keine Unwuchten entstehen können. Folglich kann die Antriebseinrichtung des Küchengeräts nicht beschädigt werden.

Erfindungsgemäß weist jeder der Bügel aus der Mehrzahl an Bügel mindestens zwei Wirkkörper auf. Dadurch, dass ein jeder Bügel mindestens zwei Wirkkörper aufweist kann ein symmetrischer Aufbau hergestellt werden, welches ebenfalls Unwuchten im Betrieb minimiert. Durch die Anordnung mehrerer Wirkkörper ist eine maximierbare, die Effizienz der Nahrungsmittelverarbeitung in Punkto Zeit und/oder Ergebnis steigernde, Wirkfläche bereitstellbar. Dies gilt insbesondere dann, wenn die Wirkkörper zweier Bügel auf unterschiedlichen Niveaus am Bügel angeordnet und folglich auf unterschiedlichen Niveaus mit dem Nahrungsmittel in Kontakt stehen. Dabei hat sich bewährt, jeweils zwei Wirkkörper symmetrisch zu der Rotationsachse des Antriebsschaftes der Rührvorrichtung anzuordnen. Der symmetrische Aufbau wirkt zusätzlich positiv auf die Antriebseinheit eines elektrisch angetriebenen Handrührer, da somit keine störenden Unwuchten entstehen können.

Die vorliegende Erfindung eignet sich insbesondere für Küchengeräte mit zwei Rührvorrichtungen, welche in entgegen gesetzte Richtungen durch einen elektrischen Motor angetrieben werden. Es ist jedoch ebenfalls denkbar, dass die vorliegende Erfindung bei einem Handgerät, insbesondere bei einem Hand- oder Stabmixer, Verwendung findet.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch jeweils in einer Seitenansicht, einer perspektivischen Ansoruch und in einer Draufsicht:
- Fig. 1a, 1b, 1c: ein erstes Ausführungsbeispiel einer Rührvorrichtung nach der Erfindung;
- Fig. 2a, 2b, 2c: ein zweites Ausführungsbeispiel einer Rührvorrichtung nach der Erfindung;
- Fig. 3a, 3b, 3c: ein drittes Ausführungsbeispiel einer Rührvorrichtung nach der Erfindung;
- Fig. 4a, 4b, 4c: ein viertes Ausführungsbeispiel einer Rührvorrichtung nach der Erfindung;
- Fig. 5a, 5b, 5c: ein fünftes Ausführungsbeispiel einer Rührvorrichtung nach der Erfindung;
- Fig. 6a, 6b, 6c: ein sechstes Ausführungsbeispiel einer Rührvorrichtung nach der Erfindung;
- Fig. 7a, 7b, 7c: ein siebtes Ausführungsbeispiel einer Rührvorrichtung nach der Erfindung; und
- Fig. 8a, 8b, 8c: ein achtes Ausführungsbeispiel einer Rührvorrichtung nach der Erfindung;

### Ausführliche Beschreibung der Figuren

Bei der nachfolgenden Beschreibung bevorzugter Ausgestaltungen der vorliegenden Erfindung bezeichnen gleiche Bezugszeichen gleiche oder vergleichbare Komponenten.

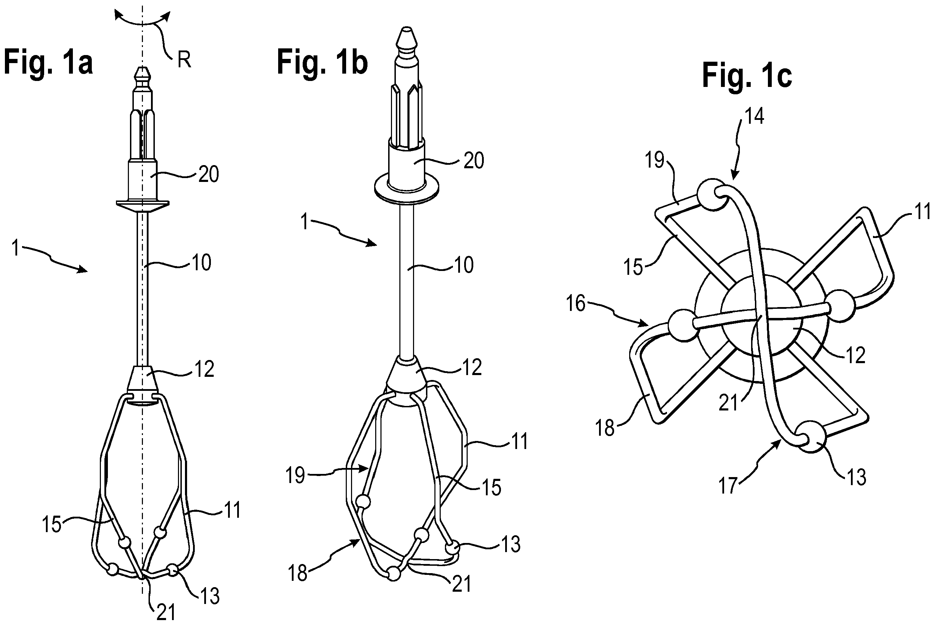

Fig. 1a zeigt in einer Seitenansicht; Fig. 1b in einer perspektivischen Ansicht 1b und Fig. 1c in einer Draufsicht eine erste Ausführungsform einer Rührvorrichtung gemäß der vorliegenden Erfindung für ein elektrisches bzw. elektromotorisches Küchengerät, insbesondere ein Handrührgerät (nicht dargestellt). Die dargestellte Rührvorrichtung ist als Quirl 1 ausgebildet, welcher rotierend von einem Elektromotor des Küchengeräts angetrieben wird. Dazu weist die Rührvorrichtung 1 eine Kupplung 20 auf, die am oberen Ende eines Antriebsschaftes 10 angeordnet ist. Die Kupplung 20 wirkt mit einer weiteren Kupplung, welche im Küchengerät angeordnet ist, zusammen, so dass der Elektromotor die Rührvorrichtung 1 antreiben kann. Das Kupplungssystem treibt somit den Antriebsschaft 10 rotierend an. Bevorzugt ist der Antriebsschaft 10 aus einem metallischen Material, insbesondere Edelstahl, hergestellt, welches eine hohe Steifigkeit und eine leichte Herstellbarkeit gewährleistet. Es ist jedoch auch denkbar, dass die gesamte Rührvorrichtung 1 samt Antriebsschaft 10 einstückig aus Kunststoff oder einem anderen geeigneten Material hergestellt ist.

Der Antriebsschaft 10 weist an seinem der Kupplung 20 gegenüber liegenden Ende 12 einen ersten und einen zweiten schlaufenförmigen Bügel 11 und 15. Die Bügel 11, 15 können in deren Länge zumindest teilweise einen konstanten Querschnitt aufweisen. Die Bügel 11 und 15 können aus einem metallischen Material bestehen und sind drahtförmig ausgebildet. Durch die Wahl des Materials kann gewährleistet werden, dass die Bügel 11, 15 im Wesentlichen steif sind. Das Material, insbesondere drahtförmiges Material, ist vorzugsweise so ausgewählt, dass keine wesentlichen Verformungen der Rührvorrichtung 1 im Betrieb entstehen. Das Ende 12 des Antriebsschaftes 10 ist mit den Bügeln 11 und 15 ebenfalls starr und sicher verbunden. Die Verbindung im Bereich des Endes 12 des Antriebsschaftes 10 kann unterschiedliche Ausbildungen aufweisen. So ist es beispielsweise denkbar, dass die Bügel 11 und 15 mit dem Antriebsschaft 10 einstückig hergestellt sind, jedoch eine feste Kupplung oder eine Löt- bzw. Schweißstelle ist ebenfalls realisierbar. Die Verbindung sollte jedoch dergestalt sein, dass im Betrieb die Bügel 11 und 15 fest mit dem Ende 12 des Antriebsschaftes 10 verbunden sind, um entsprechend auf das Nahrungsmittel oder das Nahrungsmittel zu wirken.

Die Bügel 11 und 15 sind gemäß einer beispielhaften Ausführungsform drahtförmig ausgebildet und sie bestehen aus einem metallischen Draht. Die Bügel 11 und 15 treten aus dem Ende 12 des Antriebsschaftes 10 heraus und spannen im Wesentlichen zwei Flächen auf, welche bevorzugt rechtwinklig aufeinander treffen. Dadurch weisen die zwei Bügel 11 und 15 einen Kreuzpunkt 21 auf, in welchem diese beispielsweise zusammengelötet sein können. Es ist jedoch ebenfalls möglich, dass die zwei Bügel keinen Kontaktpunkt 21 aufweisen, so dass der Lötvorgang bei der Herstellung entfällt. Auch ist es denkbar, dass die zwei drahtförmigen Bügel 11 und 15 im Kontaktpunkt 21 ineinander verhakt oder gewickelt werden können. Ferner ist es ebenfalls denkbar, dass die Rührvorrichtung weitere Bügel 11, 15 aufweist welche symmetrisch aus dem Ende 12 des Antriebsschaftes 10 herausragen und eine Mehrzahl bzw. Vielzahl an sich überkreuzenden Ebenen definieren.

Die drahtförmigen metallischen Bügel 11, 15 weisen im unteren Bereich, d.h. in deren jeweiligen Wirkbereich 16, 17, mehrere Wirkkörper 13 auf. Die Wirkkörper 13 können (wie dargestellt) kugelförmig ausgebildet sein und entweder ebenfalls aus einem metallischen Material bestehen oder auch aus Kunststoff. Auch andere Materialien sind vorstellbar. Ebenfalls möglich ist die einstückige Ausbildung der Wirkkörper 13 zusammen mit den Bügeln 11 und 15. In diesem Fall könnten diese beispielsweise mit Hilfe eines Gießprozesses in einem Herstellungsschritt produziert werden. Auch ein Anlöten der kugelförmigen Wirkkörper 13 an den Bügeln 11 und 15 in einem separaten Herstellungsschritt ist implementierbar bzw. realisierbar.

Gemäß dieser beispielhaften Ausführungsform der vorliegenden Rührvorrichtung 1 sind die Wirkkörper 13 im unteren Drittel, entsprechend dem ersten und zweiten Wirkbereich 17, 18, der Bügel 11 und 15 angeordnet. Dieses untere Drittel ist auch der Bereich, der im Wesentlichen mit dem Nahrungsmittel (d.h. Lebensmittel) dauerhaft im Kontakt steht. Durch die Ausbildung oder das Anbringen der Wirkkörper 13 auf den drahtförmigen Bügeln 11 und 15 kann folglich der Wirkbereich 14 auf das Nahrungsmittel verbessert d.h. vergrößert werden. Demnach kann auch die Schlagwirkung der Rührvorrichtung 1 verbessert werden, da mit Hilfe der Wirkkörper 13 besser Luft in das Nahrungsmittel eingeschlagen bzw. eingearbeitet werden kann. Beispielsweise kann mit dieser Rührvorrichtung Eiweiß viel schneller steif geschlagen werden, als mit herkömmlichen Rührvorrichtungen. Die Bügel 11 bzw. 15 werden steif aus einem drahtförmigen metallischen Material gefertigt, so dass deren Form während der Rotation im Betrieb des Handrührgeräts im Wesentlichen unverändert bleibt. So wird effektiv das gesamte Drehmoment des Elektromotors auf das Nahrungsmittel übertragen, ohne dass die Bügel 11 und 15 eine elastische Verformung, bewirkt durch Zentrifugalkräfte, erfahren. Durch die Wirkkörper 13 wird somit erfindungsgemäß der Wirkbereich 14 vorteilhaft vergrößert. Nun kann neben der Fläche des drahtförmigen Bügels ebenfalls der Wirkbereich 14 der jeweiligen Wirkkörper 13 auf das Nahrungsmittel einwirken, welches die Qualität und Verarbeitungsgeschwindigkeit verbessert.

Um die Zirkulation des Nahrungsmittels während der Verarbeitung durch das elektromotorische Handrührgerät zu verbessern weisen die Bügel 11 und 15 jeweils ein Paar schräge Abschnitte bzw. Schrägabschnitte 18 und 19, welche in der Rotation der Rührvorrichtung 1 wie eine Schraube bzw. Spirale wirken. Die Bügel, bevorzugt Drahtbügel 11 und 14, bilden im Wesentlichen eine rechteckartige Form aus, und die schrägen Bereiche (oder Abschnitte) 18, 19 sind gegenüber der Achse R der Rührvorrichtung 1 entgegengesetzt geneigt. Die Achse R wird definiert durch den Antriebsschaft 10. Durch die schrägen bzw. geneigten Abschnitte 19, 20 wird eine Hubwirkung auf das Gut erzielt und darüber hinaus wird die Schlagwirkung verbessert.

Wie insbesondere aus Fig. 1c deutlich erkennbar kreuzen sich die zwei Bügel 11 und 15 in einem auf der Rotationsachse R liegenden Punkt 21 und sind dort beispielsweise durch eine Lötstelle miteinander verbunden. Wirkkörper 13 sind im unteren Bereich der Bügel 11 und 15 auf unterschiedlichen Niveaus angeordnet, so dass im Betrieb das Nahrungsmittel effektiv während des Bearbeitungsvorganges durch die Wirkflächen 14 verarbeitet wird. In einer bevorzugten Ausführungsform sind die Wirkkörper 13 des ersten drahtförmigen Bügels im Wesentlichen in einem horizontalen Abschnitt des rechteckigen Bügels 11 angeordnet. Der horizontale Abschnitt entspricht dem Abschnitt, welcher im Wesentlichen parallel zu einem Schüsselboden während des Betriebes der Rührvorrichtung 1 definiert wird. Im Gegensatz dazu können die erfindungsgemäßen Wirkkörper 13 auf dem zweiten Bügel 15 in einem vertikalen Abschnitt angeordnet werden, der senkrecht zum Schüsselboden steht. Durch die Ausbildung der oben erwähnten schrägen Abschnitten 18, 19 können die senkrecht stehenden Abschnitte ferner einen geneigten Winkel zum Schüsselboden aufweisen. Dadurch dass die Wirkkörper 13 des zweiten Bügels 13 jedoch im vertikalen oder geneigten Bereich angeordnet sind, erfahren sie eine schnellere Rotationsgeschwindigkeit, da der Radius zur Rotationsachse R vergrößert ist. Folglich kann die Wirkfläche 14 dieser Wirkkörper 13 mit einer erhöhten Verarbeitungsgeschwindigkeit eingesetzt werden.

Die Rührvorrichtung 1 kann beispielsweise in ein Handrührgerät eingesetzt werden, jedoch können Werkzeuge einer Küchenmaschine ebenfalls mit den erfindungsgemäßen Wirkkörper 13 versehen werden.

Vorteilhafterweise werden die Wirkkörper 13 auf die metallischen Drahtbügel 11, 15 verlötet. Im Falle einer Verwendung kugelförmiger Wirkkörper 13, können diese geeignete Bohrungen aufweisen, durch welche entsprechend die Drahtbügel 11, 15 hindurchgeführt werden, um anschließend mit diesen verlötet oder in einem anderen Verfahren verbunden zu werden. Falls die Drahtbügel 11,15 beispielsweise einen anderen Querschnitt, beispielsweise einen elliptischen oder vierkantigen oder desgleichen, aufweisen, können die Wirkkörper 13 bei der Montage besser fixiert werden. Die Bohrung der Wirkkörper 13 weist üblicherweise einen runden Querschnitt auf, so dass beispielsweise ein elliptischer oder vierkantigen Querschnitt des Drahtbügels 11 bzw. 15 mit der runden Bohrung zusammenwirken kann und der Wirkkörper kann folglich vorfixiert werden, um anschließend angelötet werden zu können. Dies erleichtert die Montage, da die Wirkkörper 13 auf dem Drahtbügel nicht unkontrolliert hin- und herrutschen können. Ähnliche Ergebnisse können mit anderen Querschnittsprofilen erreicht werden.

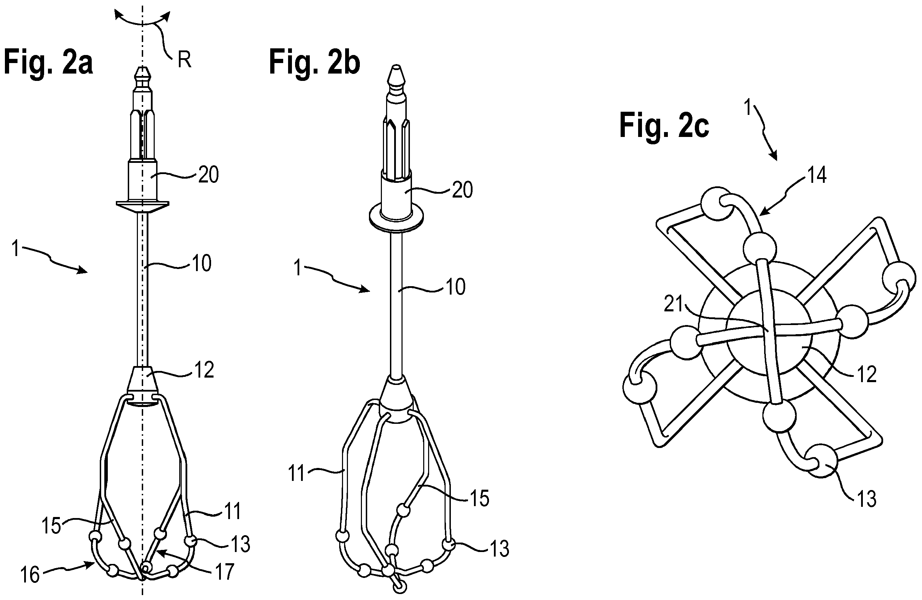

Fig. 2a, 2b, 2c zeigen drei weitere Ansichten einer Rührvorrichtung gemäß einer zweiten Ausführungsform der vorliegenden Erfindung. Gemäß dieser zweiten Ausführungsform weisen die zwei Bügel 11 und 15 jeweils vier Wirkkörper 13, um die Wirkfläche 14 auf das zu verarbeitende Nahrungsmittel zu vergrößern. Die Grundform der Bügel 11 und 15 entspricht der Form, welche in den Fig. 1a, 1b, 1c näher beschrieben ist.

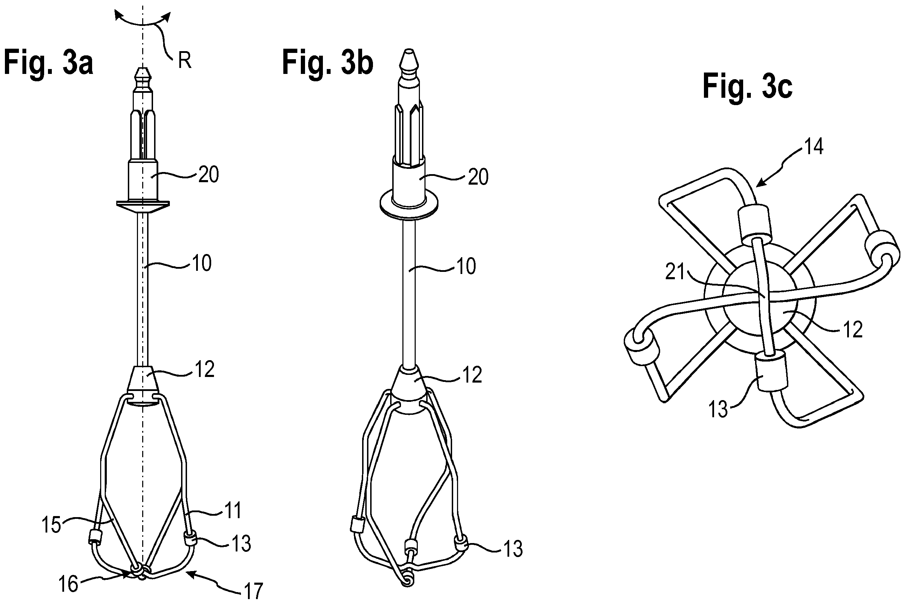

Die Fig. 3a, 3b und 3c zeigen eine dritte Ausführungsform der vorliegenden Erfindung, bei der die Wirkkörper zylindrisch geformt sind und ähnlich wie in den Fig. 1a, 1b und 1c paarweise auf den jeweiligen Bügeln 11 bzw. 15 angeordnet sind. Die Zylinderform der Wirkkörper 13 weist eine vergrößerte Wirkfläche 14 auf das Nahrungsmittel, so dass bessere Ergebnisse erzielt werden können. Die Bügel 11 bzw. 15 sind auch gemäß dieser dritten Ausführungsform drahtförmig und die Wirkkörper 13 vergrößern abschnittsweise den Bügelquerschnitt und zwar in dem Bereich wo diese angeordnet sind. Ein ähnlicher Effekt kann mit kugelförmigen Wirkkörper 13 erreich werden, wie in den Fig. 1 und 2 näher beschrieben ist.

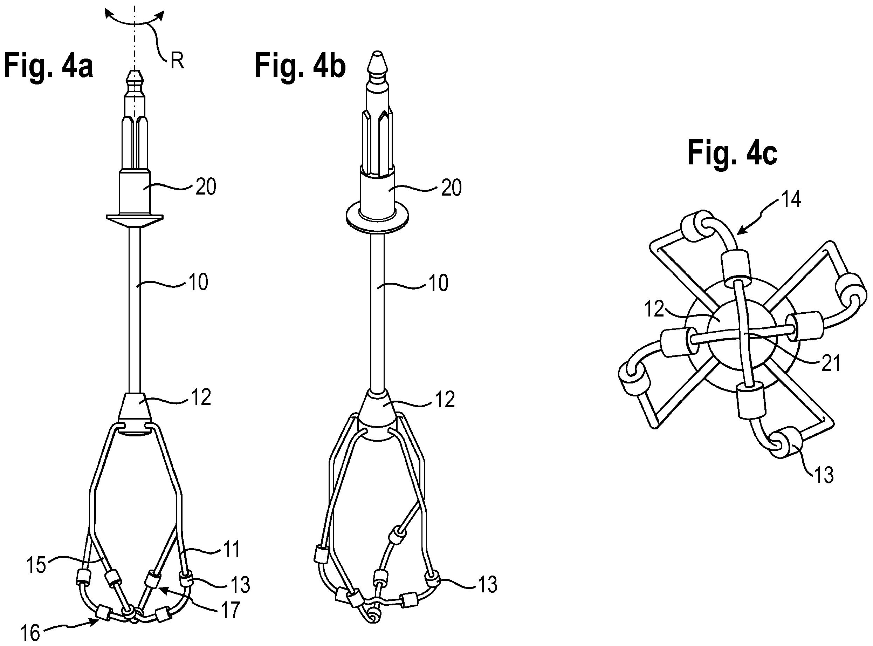

Fig. 4a, 4b und 4c zeigen eine weitere Ausführungsform, bei welcher, wie bei der dritten Ausführungsform offenbart, zylindrische Wirkkörper 13 eingesetzt werden. Um die Wirkfläche 14 zu erhöhen werden hier jeweils vier Wirkkörper 13 für den jeweiligen Bügel 11 bzw. 15 eingesetzt.

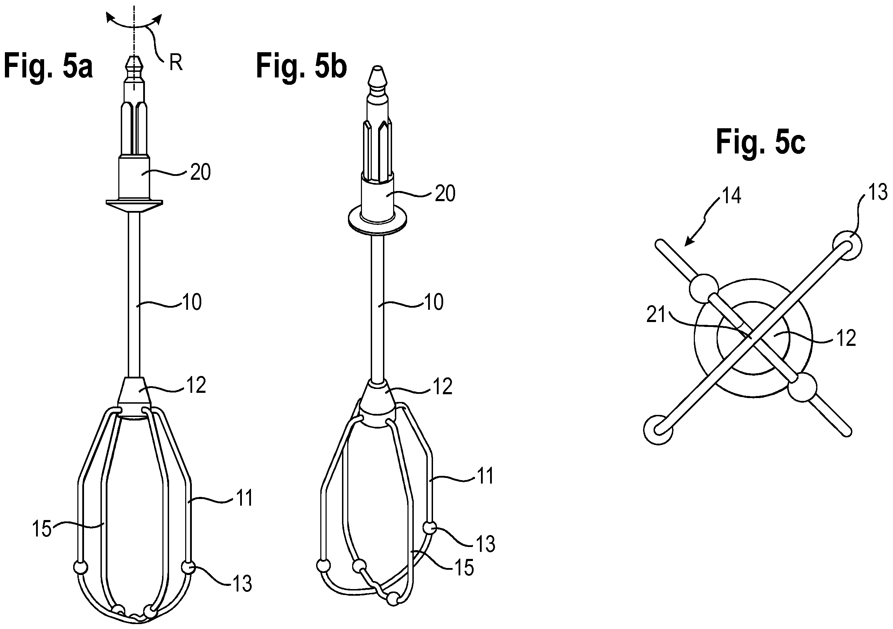

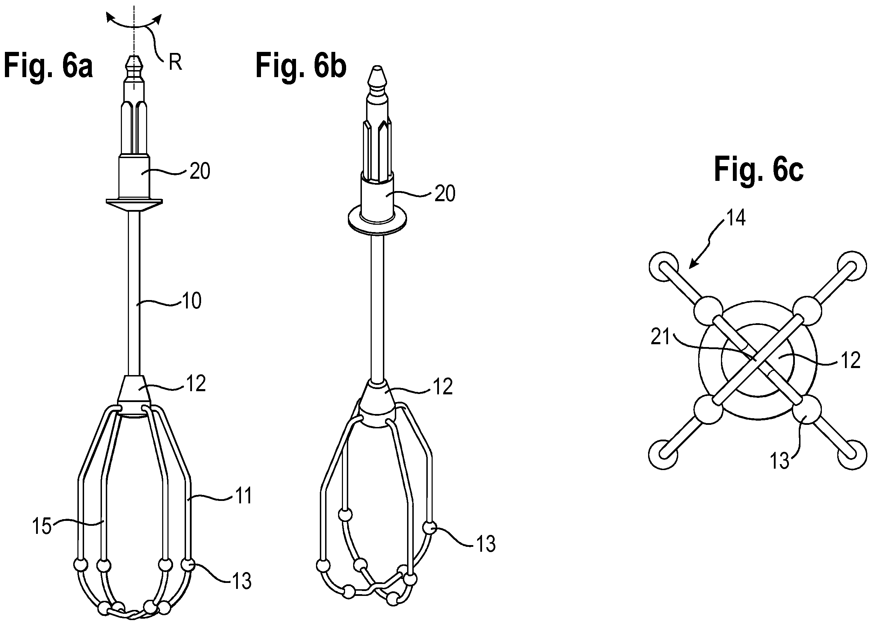

Fig. 5a, 5b und 5c zeigen eine mögliche fünfte Ausführungsform einer Rührvorrichtung gemäß der vorliegenden Erfindung. Im Gegensatz zu den oben angeführten Ausführungsformen, weisen die Bügel 11 und 15 keine Schrägabschnitte 18 bzw. 19 und zur Vergrößerung der Wirkfläche 14 sind hier ebenfalls kugelförmige Wirkkörper paarweise auf den Bügeln 11 bzw. 15 angeordnet. Fig. 6a, 6b und 6c zeigen eine weitere Ausführungsform der Rührvorrichtung, bei der vier kugelförmige Wirkkörper 13 pro Bügel 11 bzw. 15 zum Einsatz kommen.

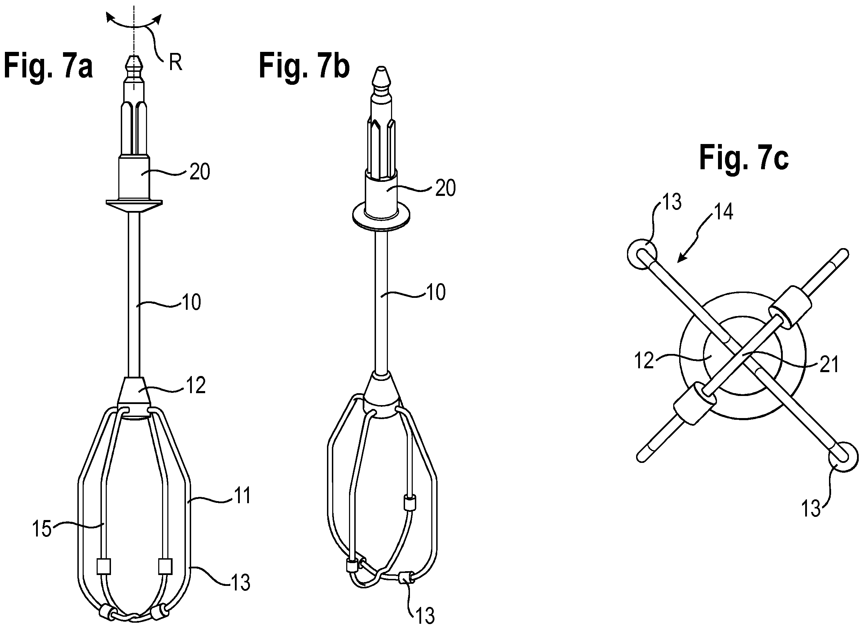

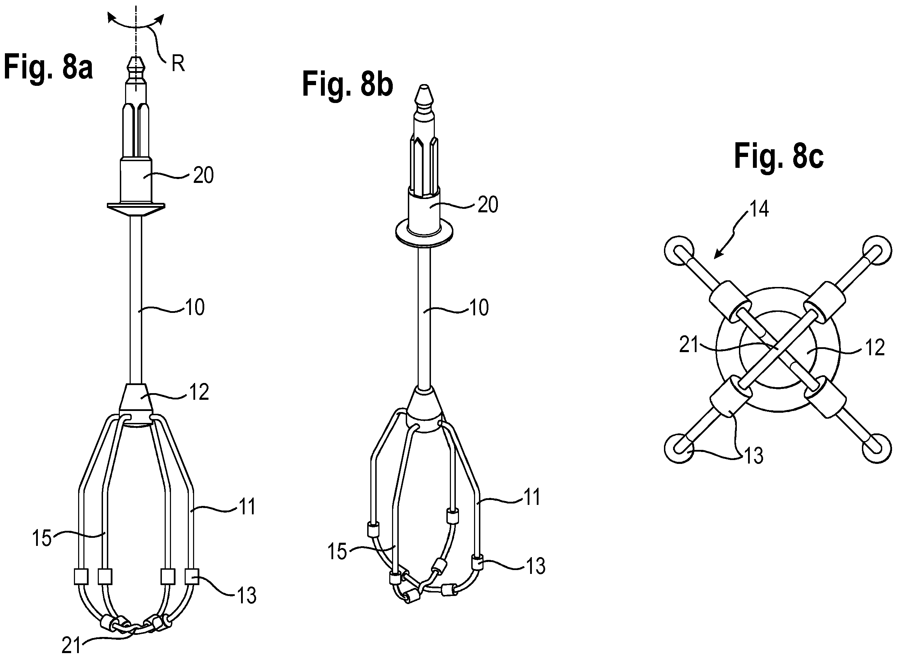

Die Fig. 7a, 7b und 7c bzw. 8a, 8b und 8c entsprechen der oben angeführten fünften Ausführungsform, wobei wiederum zum Erhöhen der Wirkfläche 14 zylindrische Wirkkörper 13 eingesetzt werden.

Durch die Verwendung der erfindungsgemäßen Wirkkörper auf einem Bügel der Rührvorrichtung kann effektiv die Wirkfläche auf ein Nahrungsmittel, insbesondere Lebensmittel, erhöht werden, so dass beim Einsatz der Rührvorrichtung in einem Handrührgerät, Mixer, Stabmixer oder einer Küchenmaschine die Verarbeitungszeit vorteilhaft verkürzt werden kann.

### BEZUGSZEICHENLISTE

- 1: Rührvorrichtung bzw. Küchengeräterührvorrichtung
- 10: Antriebsschaft
- 11: erster Bügel
- 12: Antriebsschaftsende
- 13: Wirkkörper
- 14: Wirkfläche
- 15: zweiter Bügel
- 16: erster Wirkbereich
- 17: zweiter Wirkbereich
- 18,19: Schrägabschnitte
- 20: Kupplung bzw. Koppelstelle
- 21: Kreuzpunkt bzw. Kontaktpunkt

## Patentansprüche

1. Küchengerät, insbesondere Küchenmaschine, Hand- oder Stabmixer, mit wenigstens einer Rührvorrichtung (1), insbesondere Quirl, zum Verarbeiten von Nahrungsmitteln, wobei die Rührvorrichtung (1) einen Antriebsschaft (10) umfasst, an dessen einem Ende eine Koppelstelle (20) zur Kupplung mit dem Küchengerät und an dessen anderen Ende (12) eine Mehrzahl, insbesondere zwei, schlaufenförmige Bügel (11, 15) Wirkfläche (14) angeordnet sind, wobei an den Bügeln (11, 15) jeweils mindestens zwei Wirkkörper (13) angeordnet sind, welche die Wirkfläche (14) auf das zu verarbeitende Nahrungsmittel vergrößern, wobei der jeweilige Wirkkörper (13) eine Höhen-, Breiten- und maximale Längenabmessung im Verhältnis 1:1:2, insbesondere im Verhältnis 1:1:1,5, vorzugsweise im Verhältnis 1:1:1 aufweist, **dadurch gekennzeichnet, dass** die Wirkkörper (13) der Bügel (11, 15) jeweils auf unterschiedlichen Niveaus symmetrisch zu der Rotationsachse des Antriebsschaftes (10) am jeweiligen Bügel (11, 15) angeordnet sind und folglich auf unterschiedlichen Niveaus mit dem Nahrungsmittel in Kontakt stehen.

2. Küchengerät nach Anspruch 1, **dadurch gekennzeichnet, dass** die Wirkkörper (13) als Kugel, Zylinder, Quader, Pyramide, Würfel oder Tetraeder am Bügel (11, 15) ausgebildet sind.

3. Küchengerät nach einem der vorhergehenden Ansprüche, **dadurch gekennzeichnet, dass** die Bügel (11, 15) drahtförmig ausgebildet sind.

4. Küchengerät nach einem der vorhergehenden Ansprüche, **dadurch gekennzeichnet, dass** die Bügel (11, 15) steif ausgebildet sind.

5. Küchengerät nach einem der vorhergehenden Ansprüche, **dadurch gekennzeichnet, dass** die Bügel (11, 15) einen kreisförmigen, vierkantförmigen, rechteckförmigen, flachen oder anders profilierten Querschnitt aufweisen.

6. Küchengerät nach einem der vorhergehenden Ansprüche, **dadurch gekennzeichnet, dass** die Bügel (11, 15) aus einem metallischen Material, insbesondere Edelstahl, oder einem Kunststoff hergestellt sind.

7. Küchengerät nach einem der vorhergehenden Ansprüche, **dadurch gekennzeichnet, dass** die Wirkkörper (13) aus einem metallischen Material, insbesondere Edelstahl, oder einem Kunststoff hergestellt sind.

8. Küchengerät nach einem der vorhergehenden Ansprüche, **dadurch gekennzeichnet, dass** die Oberfläche der Wirkkörper (13) glatt oder geriffelt ausgebildet ist.

9. Küchengerät nach einem der vorhergehenden Ansprüche, **dadurch gekennzeichnet, dass** die Wirkkörper (13) abnehmbar und/oder ersetzbar ausgebildet sind.

10. Küchengerät (1) nach Anspruch 10, **dadurch gekennzeichnet, dass** die Bügel (11, 15) einen gemeinsamen auf der Rotationsachse (R) des Antriebsschaftes (10) angeordneten Kreuzpunkt (21) aufweisen.

11. Küchengerät (1) nach einem der vorhergehenden Ansprüche, **dadurch gekennzeichnet, dass** die Bügel (11, 15) vier Wirkkörper (13) jeweils aufweisen.

## Claims

1. Kitchen appliance, in particular food processor, hand blender or mixing wand, having at least one stirring device (1), in particular whisk, for processing food, wherein the stirring device (1) comprises a drive shaft (10), at the one end of which a coupling point (20) is arranged for coupling with the kitchen appliance and at the other end (12) of which a plurality, in particular two, loop-type brackets (11, 15) active areas (14) are arranged, wherein at least two active elements (13) are arranged on the brackets (11, 15) in each case and increase the active surface (14) on the food to be processed, wherein the respective active element (13) has a height, width and maximum length dimension at the ratio of 1:1:2, in particular at the ratio of 1:1:1.5, preferably at the ratio of 1:1:1, **characterised in that** the active elements (13) of the brackets (11, 15) are each arranged at different levels in symmetry with the axis of rotation of the drive shaft (10) on the respective bracket (11, 15) and are therefore in contact with the food at different levels.

2. Kitchen appliance according to claim 1, **characterised in that** the active elements (13) are formed on the bracket (11, 15) as a sphere, cylinder, square, pyramid, cube or tetrahedron.

3. Kitchen appliance according to one of the preceding claims, **characterised in that** the brackets (11, 15) are embodied in wire form.

4. Kitchen appliance according to one of the preceding claims, **characterised in that** the brackets (11, 15) are embodied to be rigid.

5. Kitchen appliance according to one of the preceding claims, **characterised in that** the brackets (11, 15) have a circular, square, rectangular, flat or other profiled cross-section.

6. Kitchen appliance according to one of the preceding claims, **characterised in that** the brackets (11, 15) are manufactured from a metallic material, in particular stainless steel, or a plastic.

7. Kitchen appliance according to one of the preceding claims, **characterised in that** the active elements (13) are manufactured from a metallic material, in particular stainless steel, or a plastic.

8. Kitchen appliance according to one of the preceding claims, **characterised in that** the surface of the active elements (13) is embodied to be smooth or ribbed.

9. Kitchen appliance according to one of the preceding claims, **characterised in that** the active elements (13) are embodied to be removable and/or replaceable.

10. Kitchen appliance (1) according to claim 10, **characterised in that** the brackets (11, 15) have an intersection (21) arranged jointly on the axis of rotation (R) of the drive shaft (10).

11. Kitchen appliance (1) according to one of the preceding claims, **characterised in that** the brackets (11, 15) have four active elements (13) in each case.

## Revendications

1. Ustensile de cuisine, en particulier robot ménager, mixer manuel ou plongeur, avec au moins un dispositif de brassage (1), en particulier batteur, pour le traitement de denrées, le dispositif de brassage (1) comprenant un arbre d'entraînement (10), sur une extrémité duquel sont agencés un point de couplage (20) pour le couplage avec un ustensile de cuisine et sur l'autre extrémité (12) duquel se trouve agencée une pluralité, en particulier deux surfaces utiles (14) en étrier (11, 15) à boucle, au moins deux corps utiles (13) étant disposés chacun sur les étriers (11, 15), lesquels augmentent la surface utile (14) sur la denrée à traiter, le corps utile (13) respectif présentant des mesures de hauteur, largeur et longueur maximale dans un rapport de 1:1:2, en particulier dans un rapport de 1:1:1,5, de préférence dans un rapport de 1:1:1, **caractérisée en ce que** les corps utiles (13) des étriers (11, 15) sont agencés chacun sur des niveaux différents symétriquement à l'axe de rotation de l'arbre d'entraînement (10) sur l'étrier (11, 15) respectif et restent ensuite en contact sur différents niveaux avec la denrée.

2. Ustensile de cuisine selon la revendication 1, **caractérisé en ce que** les corps utiles (13) sont exécutés sur l'étrier (11, 15) sous forme de billes, de cylindres, de cubes, de pyramides, de dés ou de tétraèdres.

3. Ustensile de cuisine selon l'une des revendications précédentes, **caractérisé en ce que** les étriers (11, 15) sont exécutés filaires.

4. Ustensile de cuisine selon l'une des revendications précédentes, **caractérisé en ce que** les étriers (11, 15) sont exécutés raides.

5. Ustensile de cuisine selon l'une des revendications précédentes, **caractérisé en ce que** les étriers (11, 15) présentent une coupe circulaire, carrée, rectangle, plate ou une autrement profilée.

6. Ustensile de cuisine selon l'une des revendications précédentes, **caractérisé en ce que** les étriers (11, 15) sont fabriqués en matière métallique, en particulier en acier ou en matière synthétique.

7. Ustensile de cuisine selon l'une des revendications précédentes, **caractérisé en ce que** les corps utiles (13) sont fabriqués en matière métallique, en particulier en acier ou en matière synthétique.

8. Ustensile de cuisine selon l'une des revendications précédentes, **caractérisé en ce que** la surface des corps utiles (13) sont exécutées planes ou ondulées.

9. Ustensile de cuisine selon l'une des revendications précédentes, **caractérisé en ce que** les corps utiles (13) sont exécutées amovibles et/ou remplaçables.

10. Ustensile de cuisine (1) selon la revendication 10, **caractérisé en ce que** les étriers (11, 15) présentent un point d'intersection (21) commun situé sur l'axe de rotation (R) de l'arbre d'entraînement (10).

11. Ustensile de cuisine (1) selon l'une des revendications précédentes, **caractérisé en ce que** les étriers (11, 15) présentent chacun quatre corps utiles (13).
